# EUROPÄISCHE PATENTSCHRIFT

(11) **EP 3 850 302 B1**
(45) Veröffentlichungstag und Bekanntmachung des Hinweises auf die Patenterteilung: **11.01.2023**
(21) Anmeldenummer: 19765209.2
(22) Anmeldetag: 02.09.2019
(51) Int. Cl.: G01B 11/06, G01B 11/10, G01B 11/24, G01B 15/02, G01S 7/02, G01S 7/40, G01S 13/08, G01S 13/88, H01Q 15/16, H01Q 19/18

(54) **VORRICHTUNG UND VERFAHREN ZUM DETEKTIEREN EINES GEGENSTANDES**
APPARATUS AND METHOD FOR DETECTING AN OBJECT
DISPOSITIF ET PROCÉDÉ POUR DÉTECTER UN OBJET

(30) Priorität: 13.09.2018 DE 102018122391
(43) Veröffentlichungstag der Anmeldung: 21.07.2021
(73) Patentinhaber: SIKORA AG, 28307 Bremen (DE)
(72) Erfinder: SIKORA, Harald, 28357 Bremen (DE)
(74) Vertreter: Hauck Patentanwaltspartnerschaft mbB
(86) Internationale Anmeldenummer: PCT/EP2019/073341
(87) Internationale Veröffentlichungsnummer: WO 2020/053016

(56) Entgegenhaltungen:
- DE-U1-202016 008 526
- US-A1- 2007 252 992
- US-A1- 2014 209 802
- US-A1- 2016 265 910
- Thorlabs: "THz Bandppass filters: 10mm -590mm center wavelength", , 7. Februar 2018 (2018-02-07), XP055642067, Gefunden im Internet: URL:https://www.thorlabs.com/catalogpages/ obsolete/2018/FB19M10.pdf [gefunden am 2019-11-13]
- TREVOR F STARR ED - TREVOR F STARR (ED): "6 - Pultrusion applications - a world-wide review", 25. Juli 2000 (2000-07-25), PULTRUSION FOR ENGINEERS, CRC PRESS, US, PAGE(S) 197 - 230, XP009517197, ISBN: 978-1-85573-425-8 [gefunden am 2014-03-27] Seite 198

## Beschreibung

Die Erfindung betrifft eine Vorrichtung zum Detektieren eines mittels einer Fördereinrichtung durch einen Messbereich der Vorrichtung geförderten Gegenstandes, umfassend eine Sendeeinrichtung zum Aussenden von Messstrahlung mit einer Frequenz im Gigahertz- oder Terahertzbereich auf die Außenkontur des Gegenstands und eine Empfangseinrichtung zum Empfangen der von dem Gegenstand reflektierten Messstrahlung. Die Erfindung betrifft außerdem ein entsprechendes Verfahren.

Mit derartigen Vorrichtungen kann beispielsweise der Durchmesser von Rohren bestimmt werden. Es sind Sendeeinrichtungen bekannt, die Messstrahlung im Gigahertz- oder Terahertzfrequenzbereich aussenden. Solche Messstrahlung ist weitgehend unempfindlich gegen Störungen, wie sie durch Dampf o. ä. auftreten können. Die von der Sendeeinrichtung ausgesandte Messstrahlung wird von dem Rohr reflektiert und gelangt zurück zur Empfangseinrichtung. Eine Auswerteeinrichtung kann beispielsweise aufgrund einer Laufzeitmessung den Abstand der Sende- und Empfangseinrichtung zu dem Rohr messen. Erfolgt eine solche Messung beispielsweise auf unterschiedlichen Seiten des Rohrs, kann auf diese Weise der Durchmesser bestimmt werden. Auch kann bei einer Messung über mehrere Messpunkte über den Umfang des Rohres verteilt die Außenkontur erfasst werden, beispielsweise eine Ovalität oder dergleichen.

Bei der Herstellung von Rohren besteht grundsätzlich der Wunsch, die Außenkontur noch während der Formgebung bzw. möglichst früh nach der endgültigen Formgebung des Rohrs zu messen, damit gegebenenfalls frühzeitig in die Produktionsparameter eingegriffen und Ausschuss vermieden werden kann. Beispielsweise bei der Herstellung von Metallrohren mittels Walzen werden die Walzen mittels Wasser gekühlt, wodurch es zu starker Dampfentwicklung kommt.

Auch finden sich in dieser Umgebung häufig Schmutzpartikel, wie Metallstaub, Zunder oder dergleichen. Insbesondere bei der Herstellung von Kunststoffrohren kann d eine sogenannte Kalibrierhülse aus Metall Verwendung finden, gegen die das zu diesem Zeitpunkt noch weiche Kunststoffrohr beispielsweise durch Anlegen eines Unterdrucks gesaugt wird und so die endgültige Form erhält. Auch hier erfolgt eine Kühlung mit Wasser, wodurch es wiederum zu erheblicher Dampfentwicklung kommt. Optische Messeinrichtungen haben in solchen Messumgebungen erhebliche Probleme.

Auch bei der Verwendung von Terahertz- oder Gigahertzstrahlung ist bei der Vermessung von Gegenständen in einer solchen Messumgebung das Beeinträchtigen der Messergebnisse durch Schmutzpartikel problematisch. Außerdem sind die Sende- und Empfangseinrichtungen in der erläuterten rauen Messumgebung hohen Temperaturen ausgesetzt, was zu entsprechenden Störungen bzw. Beschädigungen führen kann. Wird andererseits zur Vermeidung dieser Probleme die Außenkontur zu einem späteren Zeitpunkt detektiert, wenn die Messumgebung weniger kritisch ist, kommt es bei etwaigen unerwünschten Abweichungen der Produktionsparameter zu erheblichem Ausschuss.

Auch bei der Herstellung oder Verarbeitung von beispielsweise Grobblechen, Warmband- oder Kaltbandblechen besteht oftmals der Wunsch, die Dicke, Breite, Planarität und/oder Oberflächenbeschaffenheit zu messen und zu beurteilen. Dabei ist es häufig erforderlich, die Sende- und Empfangseinrichtungen auch unterhalb des zu vermessenden Produktes anzuordnen. Wiederum sind die Sende- und Empfangseinrichtungen dabei erheblichen Verschmutzungsgefahren ausgesetzt.

Aus US 2007/0252992 A1 sind eine Vorrichtung und ein Verfahren zum Erlangen von Informationen über eine Probe mittels elektromagnetischer Strahlung im Gigahertz- oder Terahertz-Bereich bekannt. Zwischen einem Strahlungssender und einer zu untersuchenden Probe ist dabei ein Polarisator angeordnet, der als Drahtgitter ausgebildet sein kann. Dabei können je nach Polarisation von dem Polarisator durchgelassene oder reflektierte Strahlungsanteile individuell ausgewertet werden.

Aus US 2016/0265910 A1 sind eine Vorrichtung und ein Verfahren zum Bestimmen physikalischer Eigenschaften eines integrierten Rechenelements unter Verwendung von Oberflächenakustikwellen, insbesondere zur Untersuchung optisch dünner Schichten, bekannt. Als elektromagnetische Strahlung kann Terahertzstrahlung verwendet werden. Zwischen einer Sendeeinrichtung und der zu untersuchenden Probe können ein optisches Element, wie ein Polarisator, und ein Fenster angeordnet sein.

Aus DE 20 2016 008 526 U1 ist eine Vorrichtung zum Messen des Durchmessers und/oder der Wanddicke eines Strangs eines mittels Führungsmitteln in Richtung seiner Längsachse durch die Vorrichtung geführten Strangs bekannt, umfassend einen Sender zum Aussenden von Terahertzstrahlung und einen Empfänger zum Empfangen von an dem Strang und/oder an einem hinter dem Strang angeordneten Reflektor reflektierter Terahertzstrahlung. Die Vorrichtung umfasst weiter eine Auswerteeinrichtung, die dazu ausgebildet ist, anhand der von dem mindestens einen Empfänger empfangenen Messsignale den Durchmesser und/oder die Wanddicke des Stranges zu bestimmen.

Ausgehend von dem erläuterten Stand der Technik liegt der Erfindung die Aufgabe zugrunde, eine Vorrichtung und ein Verfahren der eingangs genannten Art bereitzustellen, die auch in einer wie erläutert rauen Messumgebung zuverlässige Messergebnisse liefern und damit den Ausschuss bei der Herstellung des zu detektieren Gegenstandes minimieren.

Die Erfindung löst die Aufgaben durch die unabhängigen Ansprüche 1 und 11. Vorteilhafte Ausgestaltungen finden sich in den abhängigen Ansprüchen, der Beschreibung und den Figuren.

Für eine Vorrichtung der eingangs genannten Art löst die Erfindung die Aufgabe dadurch, dass zwischen der Sendeeinrichtung und/oder der Empfangseinrichtung einerseits und dem Messbereich andererseits ein für die Messstrahlung transparentes und für Gas durchlässiges Schutzgitter angeordnet ist.

Der zu detektierende Gegenstand wird während der Messung durch den Messbereich der erfindungsgemäßen Vorrichtung gefördert. Hierzu umfasst die Vorrichtung eine entsprechende Fördereinrichtung. Bei dem Gegenstand kann es sich zum Beispiel um einen strangförmigen Gegenstand, wie ein Rohr handeln, insbesondere einen strangförmigen Gegenstand, wie ein Rohr, aus Metall, wie Stahl, oder Kunststoff oder Glas. Bei dem zu detektierenden Gegenstand kann es sich auch um einen im Wesentlichen in einer Ebene liegenden Gegenstand, beispielsweise ein Blech, handeln, insbesondere ein Grobblech, ein Warmbandblech oder ein Kaltbandblech. Die Erfindung betrifft auch ein System, umfassend die erfindungsgemäße Vorrichtung und den zu detektierenden Gegenstand. Dabei kann mindestens eine Sendeeinrichtung und/oder mindestens eine Empfangseinrichtung der Vorrichtung unterhalb des zu detektierenden Gegenstandes angeordnet sein. Der zu detektierende Gegenstand kann je nach Material während der Messung noch eine sehr hohe Temperatur besitzen, beispielsweise Stahlrohre eine Temperatur von über 1000°C oder Glasrohre eine Temperatur von über 2000°C.

Zum Detektieren des Gegenstandes sendet die Sendeeinrichtung elektromagnetische Messstrahlung mit einer Frequenz im Gigahertz- oder Terahertzbereich aus. Die Sendeeinrichtung kann beispielsweise Messstrahlung im Frequenzbereich von 0,001 Terahertz bis 6 Terahertz, vorzugsweise im Frequenzbereich von 0,02 bis 3 Terahertz aussenden. Insbesondere kann die Messstrahlung Radiowellen aussenden. Solche Messstrahlung ist besonders gut geeignet für eine Messung in einer rauen Umgebung, da sie weitestgehend störungsunempfindlich ist gegen eine Verschmutzung des Messweges durch Dampf oder dergleichen. Die Messstrahlung trifft auf die Außenkontur des Gegenstandes, wird von dieser reflektiert und gelangt zu der Empfangseinrichtung, die diese als Messereignis detektiert. Auf dieser Grundlage kann beispielsweise in an sich bekannter Weise anhand einer Laufzeitmessung ein Abstand der Sende- und Empfangseinrichtungen zu dem Gegenstand bestimmt werden. Damit ist es beispielsweise möglich, den Durchmesser und/oder die Wanddicke und/oder die Außenkontur des Gegenstandes zu bestimmen, insbesondere wenn über mehrere über den Umfang des Gegenstands verteilte Messorte gemessen wird. Bei einem ebenen Gegenstand können beispielsweise seine Breite, Planarität und/oder Oberflächenbeschaffenheit oder durch Vorsehen von mehreren Sende- und Empfangseinrichtungen auf unterschiedlichen Seiten seine Dicke gemessen werden. Auf diese Weise können zum Beispiel auch Abweichungen der Außenkontur von einer vorgegebenen Form, zum Beispiel einer Kreisquerschnittsform, insbesondere eine Ovalität, oder einer vorgegebenen Dicke oder Planarität erkannt werden. Auf dieser Grundlage wiederum kann steuernd in die Produktionsparameter der Herstellung des Gegenstandes eingegriffen werden.

Erfindungsgemäß ist zwischen der Sendeeinrichtung und/oder der Empfangseinrichtung einerseits und dem Messbereich, in dem sich der zu detektierende Gegenstand bei der Messung befindet, andererseits ein Schutzgitter angeordnet. Das Schutzgitter ist zumindest nahezu transparent für die Messstrahlung. Die Gitterkonstante des Schutzgitters kann erheblich kleiner als die Wellenlänge der Messstrahlung sein. Es ist auch möglich, dass das Schutzgitter einen Teil der Messstrahlung absorbiert. Allerdings gelangt insbesondere der überwiegende Teil der Messstrahlung durch das Schutzgitter hindurch, damit für die erfindungsgemäße Messung möglichst hohe Amplituden zur Verfügung stehen. Selbstverständlich kann das Schutzgitter auch vollständig transparent sein für die Messstrahlung. Außerdem ist das Schutzgitter gasdurchlässig, insbesondere luftdurchlässig. Die Sendeeinrichtung und die Empfangseinrichtung können im Wesentlichen am selben Ort oder direkt benachbart zueinander angeordnet sein. Ein gemeinsames Schutzgitter kann dann sowohl die Sendeeinrichtung als auch die Empfangseinrichtung schützen. Es ist aber auch denkbar, dass die Sendeeinrichtung und die Empfangseinrichtung an unterschiedlichen Orten angeordnet sind. Auch ist es möglich, dass mehrere, zum Beispiel zwei Schutzgitter vorgesehen sind, von denen eines die Sendeeinrichtung und eines die Empfangseinrichtung schützt.

Das erfindungsgemäß vorgesehene Schutzgitter schützt die Sendeeinrichtung und die Empfangseinrichtung vor Schmutzpartikeln, Kühlflüssigkeit, wie Wasser, oder schädlichen Gasen. Insbesondere verhindert das Schutzgitter, dass solche störenden Bestandteile in den Bereich der Messsensorik, also der Sendeeinrichtung und Empfangseinrichtung, gelangen können. Darüber hinaus streut das Schutzgitter auch Wärmestrahlung weg von der Messsensorik. Dadurch wird die Messsensorik vor hohen Temperaturen geschützt. Es besitzt durch die Gitterstreben des Schutzgitters definierte Öffnungen, durch die Gas, insbesondere Luft, hindurchfließen kann. Aufgrund der Gas- bzw. Luftdurchlässigkeit erfolgt schon durch den normalen Luftaustausch eine Reinigung des Schutzgitters von Schmutzpartikeln. Dieser Luftaustausch führt auch bereits vorteilhaft zu einer Kühlung der Sendeeinrichtung und Empfangseinrichtung. Außerdem erlaubt die gasdurchlässige Ausgestaltung des Schutzgitters ein besonders zuverlässiges Freihalten des Schutzgitters von Verschmutzungen, insbesondere durch eine Spülung, wie unten noch näher erläutert werden wird. Dies ist insbesondere in den eingangs erläuterten rauen Umgebungsbedingungen von großer Bedeutung. Damit liefert die erfindungsgemäße Vorrichtung in zuverlässiger Weise auch in rauen Messumgebungen sichere Messergebnisse, so dass Ausschuss minimiert werden kann.

Gemäß einer besonders praxisgemäßen Ausgestaltung können die Sendeeinrichtung und die Empfangseinrichtung durch einen Transceiver gebildet sein. Ein solcher Transceiver kombiniert die Sende- und Empfangseinrichtung, die damit praktisch am selben Ort angeordnet sind.

Gemäß einer weiteren Ausgestaltung kann das Schutzgitter durch ein Glasfasergewebe gebildet sein. Ein Glasfasergewebe ist für die erfindungsgemäßen Zwecke besonders gut geeignet. Es ist einerseits gut durchlässig für Gas und insbesondere für Radiowellen transparent. Andererseits weist es eine hohe Beständigkeit gegen Verschmutzungen und Wärme auf. Grundsätzlich sind aber auch andere Materialien denkbar, beispielsweise ein Keramikfiltermaterial o. ä.

Nach einer weiteren Ausgestaltung können die Sendeeinrichtung und die Empfangseinrichtung in einem Gehäuse angeordnet sein, wobei das Schutzgitter eine dem Messbereich zugewandte Gehäuseöffnung verschließt. Durch ein solches Gehäuse wird ein besonders sicherer Schutz vor störenden Einflüssen aus der Umgebung erreicht. Das Gehäuse kann insbesondere bis auf das Schutzgitter und einen gegebenenfalls vorgesehenen Zugang für ein Spülgas geschlossen sein.

Die erfindungsgemäße Vorrichtung umfasst weiterhin eine Spüleinrichtung zum Spülen des Schutzgitters mit einem Spülgas. Als Spülgas kommt in besonders einfacher Weise Spülluft infrage. Durch die Spüleinrichtung kann in dem Gehäuse ein leichter Überdruck aufrechterhalten werden, der das Risiko des Eindringens von Verschmutzungen weiter verringert. Durch die Spüleinrichtung wird Spülgas in das Gehäuse eingeleitet. Das Spülgas fließt dann insbesondere durch das gasdurchlässige Schutzgitter hindurch und entweicht beispielsweise in die Umgebung. Dadurch werden auch sich im Bereich des Schutzgitters ansammelnde Schmutzpartikel o. ä. abtransportiert und das Schutzgitter so für die Messung gereinigt. Außerdem erfolgt durch die Spülung eine weitergehende Kühlung der Sendeeinrichtung und Empfangseinrichtung.

Die Spüleinrichtung kann gemäß einer weiteren Ausgestaltung dazu ausgebildet sein, das Schutzgitter vor, während und/oder nach einer Messung permanent mit dem Spülgas zu spülen. Damit wird ein jederzeit zuverlässiges Freihalten des Schutzgitters von Verschmutzungen erreicht.

Zusätzlich oder alternativ ist es auch möglich, dass die Spüleinrichtung dazu ausgebildet ist, das Schutzgitter vor, während und/oder nach einer Messung stoßweise mit dem Spülgas zu spülen. Durch ein stoßweises Spülen, insbesondere mit einem gegenüber dem permanenten Spülen erheblich erhöhten Gasdruck, können hartnäckigere oder größere Gitterverschmutzungen zuverlässig gelöst werden. Das stoßweise Spülen kann zum Beispiel in definierten zeitlichen Abständen oder abhängig von Messergebnissen der Vorrichtung erfolgen.

Die erfindungsgemäße Vorrichtung kann weiterhin eine Auswerteeinrichtung umfassen, an der Messwerte der Empfangseinrichtung anliegen, und die dazu ausgebildet ist, anhand der Messwerte den Durchmesser und/oder die Wanddicke und/oder die Außenkontur des Gegenstandes zu bestimmen. Dies kann durch die Auswerteeinrichtung in an sich bekannter Weise durch eine Laufzeitmessung erfolgen. Eine solche Auswertung ist dem Fachmann grundsätzlich bekannt, so dass sie nicht näher erläutert werden soll.

Die erfindungsgemäße Vorrichtung kann auch eine Steuer- und/oder Regeleinrichtung umfassen, an der Messwerte der Empfangseinrichtung und/oder Auswertungsdaten der Auswerteeinrichtung anliegen, und die dazu ausgebildet ist, anhand der Messwerte der Empfangseinrichtung und/oder der Auswertungsdaten der Auswerteeinrichtung eine Prozess zur Herstellung des Gegenstandes zu steuern und/oder zu regeln.

Nach einer weiteren diesbezüglichen Ausgestaltung kann die Auswerteeinrichtung dazu ausgebildet sein, die Spüleinrichtung bei einer Veränderung der von der Empfangseinrichtung gemessenen Strahlungsintensität zum stoßweisen und/oder zum permanenten Spülen des Schutzgitters mit dem Spülgas anzusteuern. Bei Verschmutzungen des Schutzgitters kann es zu einer verringerten Durchlässigkeit und/oder einer verstärkten Absorption der Messstrahlung kommen. Auch kann es zu einer verstärkten Reflexion der Messstrahlung durch das Schutzgitter und damit zu einer erhöhten Intensität des Strahlungsechos, kommen, beispielsweise aufgrund von Metallstaub oder Wasser. Solche Effekte können anhand einer Veränderung der von der Empfangseinrichtung empfangenen Strahlungsintensität, insbesondere einer Veränderung der Strahlungsintensität über sämtliche Messwerte oder einer Veränderung der Strahlungsintensität ohne im Messbereich befindlichen Gegenstand, erkannt werden. Es können also durch die Auswerteeinrichtung insbesondere Veränderungen der Messwerte ohne zu vermessenden Gegenstand im Messbereich betrachtet werden, so dass keine Störung durch den Gegenstand vorliegt. Die Veränderung der gemessenen Strahlungsintensität kann also je nach Ursache eine Erhöhung oder eine Verringerung der Strahlungsintensität sein. Es kann für die Auswertung beispielsweise ein Korridor für einen zulässigen Intensitätsbereich definiert werden. Wird dieser verlassen, steuert die Auswerteeinrichtung die Spüleinrichtung zum stoßweisen und/oder permanenten Spülen des Schutzgitters mit dem Spülgas an. Es wird bei dieser Ausgestaltung also in vorteilhafter Weise genutzt, dass durch die Messsensorik selbst eine Verschmutzung des Schutzgitters erkannt werden kann, so dass insbesondere eine bedarfsweise Spülung zur Reinigung des Schutzgitters erfolgen kann.

Nach einer weiteren Ausgestaltung kann zwischen der Sendeeinrichtung und/oder der Empfangseinrichtung einerseits und dem Messbereich andererseits ein die Messstrahlung umlenkender Reflektor angeordnet sein. Ein solcher Reflektor ermöglicht eine größere Flexibilität hinsichtlich der Anordnung der Sendeeinrichtung und der Empfangseinrichtung in Bezug auf den Messbereich mit dem zu detektierenden Gegenstand. Dies wiederum erlaubt einen verbesserten Schutz der Sendeeinrichtung und der Empfangseinrichtung. Es ist dann beispielsweise möglich, den Gegenstand von unten zu vermessen, ohne dass die Sendeeinrichtung sowie die Empfangseinrichtung unterhalb des Gegenstand angeordnet sein müssen. Beispielsweise kann die Messstrahlung durch den Reflektor um etwa 90° abgelenkt werden.

Nach einer weiteren diesbezüglichen Ausgestaltung kann der Reflektor zwischen dem Schutzgitter und dem Messbereich angeordnet sein. Es ist dann möglich, den Gegenstand von unten zu vermessen, wobei auch das Schutzgitter nicht unterhalb des Gegenstands angeordnet sein muss. Das Schutzgitter kann dabei auch bei einer Anordnung des Reflektors unterhalb des Messbereichs, und damit einer Messung von unten, derart angeordnet sein, dass etwaige von dem zu detektierenden Gegenstand ausgehende Verschmutzungen an dem Schutzgitter vorbeifallen. Auch ist es denkbar, weitere, über den Umfang des Gegenstandes verteilt angeordnete Reflektoren und Schutzgitter sowie Sende- und Empfangseinrichtungen vorzusehen, wobei beispielsweise ein oberhalb des Messbereichs angeordnetes Schutzgitter derart angeordnet sein kann, dass von dem zu detektierenden Gegenstand ausgehende stark erwärmte, aufsteigende Luft an dem Schutzgitter vorbeizieht. Insbesondere kann das Schutzgitter bzw. können die Schutzgitter dabei senkrecht zur Messebene bzw. parallel zu einer Fallebene von Verschmutzungen und/oder parallel zu einer Aufzugsebene von heißer Luft angeordnet sein. Der Reflektor ist bei den vorgenannten Ausgestaltungen zwar möglicherweise einer erhöhten Verschmutzung ausgesetzt. Gerade Reflektoren für die hier in Rede stehende Messstrahlung sind in dieser Hinsicht allerdings relativ unempfindlich. Natürlich wäre es alternativ auch möglich, das Schutzgitter zwischen dem Reflektor und dem Messbereich für den zu detektierenden Gegenstand anzuordnen, um so auch den Reflektor vor einer Verschmutzung zu schützen.

Wie bereits erwähnt, kann es sich bei dem erfindungsgemäß zu detektierenden Gegenstand beispielsweise um einen strangförmigen Gegenstand, insbesondere um einen rohrförmigen Gegenstand, wie ein Metallrohr, insbesondere ein Stahlrohr, oder ein Kunststoffrohr, oder ein Glasrohr, oder einen im Wesentlichen in einer Ebene liegenden Gegenstand, beispielsweise ein Blech, handeln, insbesondere ein Grobblech, ein Warmbandblech oder ein Kaltbandblech, handeln. Dabei kann die Vorrichtung dazu ausgebildet sein, den zu detektierenden Gegenstand noch während der Formgebung oder direkt nach einer die endgültige Formgebung des Gegenstands bestimmenden Produktionsstrecke zu detektieren, insbesondere in einer der solchen Produktionsstrecke nachgeordneten Kühlstrecke. Die Vorrichtung kann dazu entsprechend an der Produktionsstrecke und/oder der Kühlstrecke einer Anlage zur Herstellung des Gegenstandes angeordnet sein. Die Erfindung betrifft insoweit auch ein System umfassend eine Produktionsstrecke und/oder eine Kühlstrecke einer Anlage zur Herstellung des Gegenstandes und eine erfindungsgemäße Vorrichtung. Wie erläutert, ist gerade bei einer solchen Messung von einer besonders rauen Messumgebung mit starkem Verschmutzungsrisiko und sehr hohen Temperaturen auszugehen. Auch ist im Bereich solcher Kühlstrecken mit Problemen durch auftretendes Spritzwasser als Kühlflüssigkeit zu rechnen. Die erfindungsgemäße Vorrichtung ist gerade für einen solchen Einsatz besonders gut geeignet.

Entsprechend betrifft die Erfindung auch ein Verfahren zum Detektieren eines Gegenstandes unter Verwendung einer erfindungsgemäßen Vorrichtung. Bei dem erfindungsgemäßen Verfahren kann entsprechend anhand von Messwerten der Empfangseinrichtung der Durchmesser und/oder die Wanddicke und/oder die Außenkontur des Gegenstandes bestimmt werden. Weiter kann anhand der Messwerte der Empfangseinrichtung und/oder anhand der bestimmten Werte für den Durchmesser und/oder die Wanddicke und/oder die Außenkontur des Gegenstandes ein Prozess zur Herstellung des Gegenstandes gesteuert und/oder geregelt werden. Bei dem Verfahren kann der Gegenstand noch während seiner Formgebung bzw. möglichst früh nach der endgültigen Formgebung im Bereich einer Produktionsstrecke für den Gegenstand detektiert werden. Die Produktionsstrecke gibt dem Gegenstand dabei seine abschließende Form. Bei einer solchen Messung kann beispielsweise ein Metallrohr noch Temperaturen von über 1000°C besitzen und damit noch glühen. Beispielsweise ein Glasrohr kann noch Temperaturen von über 2000°C besitzen. Auch Metallstaub und Zunder können in diesem Bereich auftreten. Insbesondere bei der Herstellung von Kunststoffrohren kann darüber hinaus eine Kalibrierhülse aus Metall vorgesehen sein, gegen die das zu diesem Zeitpunkt noch formbare Kunststoffrohr wie erläutert beispielsweise durch Anlegen eines Unterdrucks zur abschließenden Formgebung gesaugt wird. Eine solche Kalibrierhülse kann im Bereich eines Kühltanks zur Kühlung des Gegenstandes angeordnet sein. In einen solchen Kühltank kann Kühlflüssigkeit, wie Kühlwasser, zur Kühlung des Gegenstandes eingespritzt werden. Auch im Bereich einer solchen Kalibrierhülse bzw. eines solchen Kühltanks kann die erfindungsgemäße Messung erfolgen. Hierzu kann die Kalibrierhülse und/oder der Kühltank eine oder mehrere diesbezügliche Messöffnungen umfassen.

Wie bereits erläutert, kann weiter erfindungsgemäß mindestens eine Sendeeinrichtung und/oder mindestens eine Empfangseinrichtung während der Messung unterhalb des Gegenstandes angeordnet sein.

Anhand von Figuren sollen Ausführungsbeispiele der Erfindung näher erläutert werden. Es zeigen schematisch:
- Figur 1: eine erfindungsgemäße Vorrichtung in einer Querschnittsansicht nach einem ersten Ausführungsbeispiel,
- Figur 2: die Vorrichtung aus Figur 1 in einer Frontansicht, und
- Figur 3: eine erfindungsgemäße Vorrichtung in einer Querschnittsansicht nach einem zweiten Ausführungsbeispiel.

Soweit nichts anderes angegeben ist, bezeichnen in den Figuren gleiche Bezugszeichen gleiche Gegenstände.

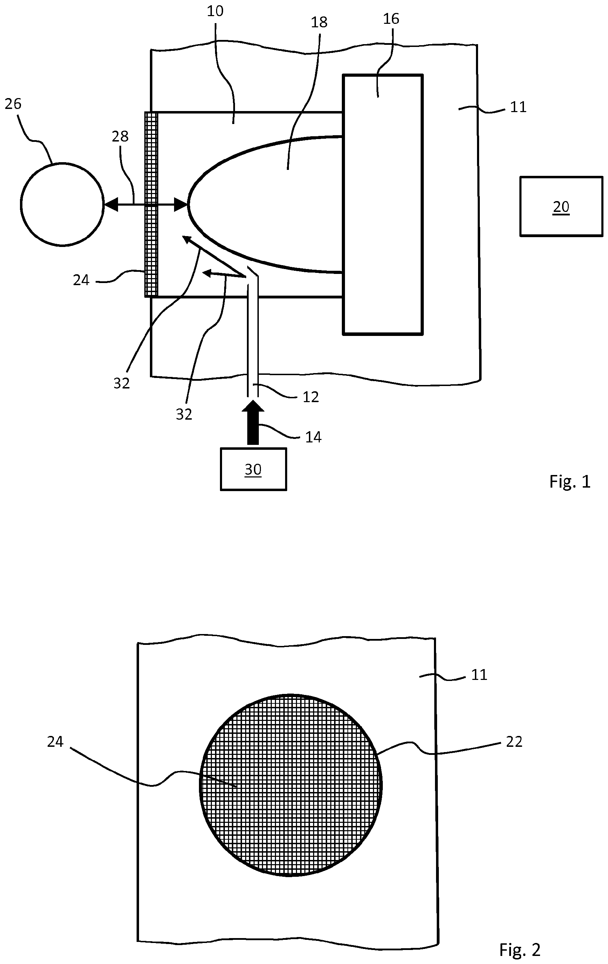

Die in Figur 1 gezeigte erfindungsgemäße Vorrichtung weist ein ausschnittsweise dargestelltes Gehäuse 10 auf mit einer Zuführung 12 für ein Spülgas entlang des Pfeils 14. Als Spülgas kann zum Beispiel Spülluft eingesetzt werden. Das Gehäuse 10 ist in einem Halteabschnitt 11 gehalten. Die Vorrichtung umfasst außerdem einen in das Gehäuse 10 integrierten Transceiver 16, der eine Sendeeinrichtung zum Aussenden von Messstrahlung und eine Empfangseinrichtung zum Empfangen von Messstrahlung bildet. Der Transceiver 16 besitzt in dem gezeigten Beispiel eine als Hyperboloid ausgebildete Antenne 18, die beispielsweise aus Teflon gebildet sein kann. Die Vorrichtung umfasst außerdem eine Auswerteeinrichtung 20, an der die Messergebnisse der Empfangseinrichtung anliegen.

Das Gehäuse 10 besitzt weiterhin eine im dargestellten Beispiel kreisförmige Gehäuseöffnung 22, die mit einem Schutzgitter 24 versehen ist. Bei dem Schutzgitter 24 kann es sich zum Beispiel um ein Glasfaserschutzgitter handeln. In einem Messbereich befindet sich ein von der Vorrichtung zu detektierender Gegenstand 26, in dem gezeigten Beispiel ein rohrförmiger Gegenstand 26, wie ein Metallrohr, insbesondere ein Stahlrohr, oder ein Kunststoffrohr. Der rohrförmige Gegenstand 26 kann mittels einer Förderereinrichtung der Vorrichtung entlang seiner Längsachse durch den Messbereich der Vorrichtung hindurch gefördert werden, in Figur 1 senkrecht in die Zeichenebene hinein. Die Sendeeinrichtung des Transceivers 16 sendet elektromagnetische Messstrahlung durch das Schutzgitter 24 hindurch auf die Außenkontur des rohrförmigen Gegenstands 26, von der die elektromagnetische Strahlung zurück zu dem Transceiver 16 und damit der Empfangseinrichtung reflektiert wird, wie in Figur 1 durch den Pfeil 28 veranschaulicht. Aus einer Laufzeitmessung kann die Auswerteeinrichtung 20 auf dieser Grundlage den Abstand zwischen dem Transceiver 16 und der Außenkontur des rohrförmigen Gegenstands 26 ermitteln und damit auf weitere Messgrößen schließen, wie dies an sich bekannt ist. Insbesondere kann für eine Bestimmung des Durchmessers und/oder der Wanddicke und/oder der Außenkontur des rohrförmigen Gegenstands 26 an mehreren Positionen über den Umfang des Gegenstands 26 verteilt eine entsprechende Abstandsmessung erfolgen.

Zum Zuführen des Spülgases in das Gehäuse 10 während der Messung über die Zuführung 12 entsprechend dem Pfeil 14 ist eine Spüleinrichtung 30 vorgesehen. Wie durch die Pfeile 32 in Figur 1 veranschaulicht, gelangt das zugeführte Spülgas durch das Schutzgitter 24 wieder nach außen in die Umgebung. Dadurch wird das Schutzgitter 24 von etwaigen Verschmutzungen freigehalten. Das Einleiten des Spülgases kann durch die Spüleinrichtung 30 vor, während und/oder nach einer Messung permanent oder stoßweise erfolgen. Beispielsweise kann durch die Auswerteeinrichtung 20 in regelmäßigen Abständen eine von der Empfangseinrichtung des Transceivers 16 empfangene Strahlungsintensität ohne oder mit im Messbereich angeordneten Gegenstand 26 ermittelt werden. Bewegt sich diese Strahlungsintensität außerhalb eines zuvor festgelegten zulässigen Korridors, sei dies durch eine Erhöhung oder Verringerung der Strahlungsintensität, kann die Auswerteeinrichtung 20 die Spüleinrichtung 30 beispielsweise zu einer Stoßspülung ansteuern.

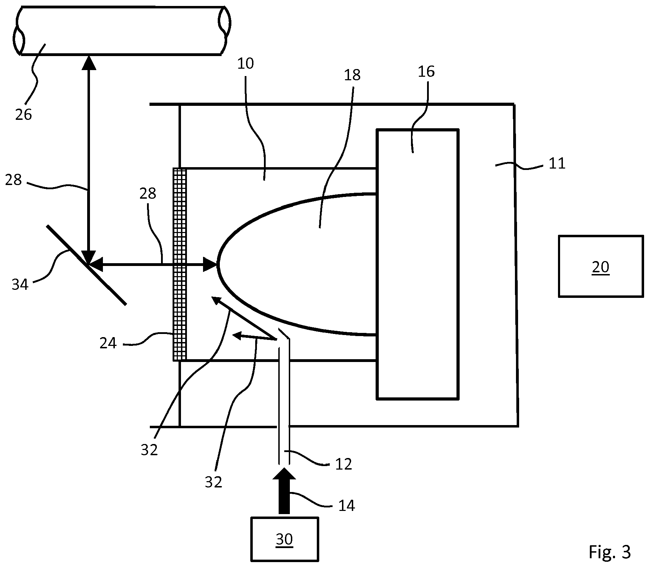

In Figur 3 ist ein zweites Ausführungsbeispiel der Erfindung gezeigt, das weitestgehend dem Ausführungsbeispiel nach den Figuren 1 und 2 entspricht. Der zu detektierende wiederum insbesondere rohrförmige Gegenstand 26 ist in Figur 3 gegenüber der Darstellung aus Figur 1 um 90° gedreht dargestellt. Wiederum kann der Gegenstand 26 entlang seiner Längsrichtung durch den Messbereich gefördert werden. Weiterhin ist im Unterschied zu dem Ausführungsbeispiel nach den Figuren 1 und 2 bei dem Ausführungsbeispiel nach Figur 3 zwischen dem Transceiver 16 und dem Messbereich mit dem zu detektieren Gegenstand 26 ein Reflektor 34 angeordnet, der die Messstrahlung in dem gezeigten Beispiel im wesentlichen senkrecht ablenkt, wie in Figur 3 durch die Pfeile 28 veranschaulicht. In dem in Figur 3 gezeigten Beispiel befindet sich der Reflektor 34 dabei zwischen dem Schutzgitter 24 und dem Messbereich mit dem zu detektierenden Gegenstand 26. Auf diese Weise kann das Schutzgitter 24 besonders sicher vor Verschmutzungen geschützt werden. Natürlich wäre es alternativ auch denkbar, das Schutzgitter 24 bei dem in Figur 3 gezeigten Ausführungsbeispiel zwischen dem Reflektor 34 und dem Messbereich mit dem zu detektierenden Gegenstand 26 anzuordnen, um beispielsweise den Reflektor 34 zu schützen. Auch könnten weitere Transceiver 16 um den Umfang des Gegenstandes 26 verteilt angeordnet sein, wobei jeweils ein Schutzgitter und Reflektor vorgesehen sein können. Die Schutzgitter können dabei jeweils so angeordnet sein, dass Verschmutzungen und/oder heiße Luft an diesen vorbeifallen bzw. vorbeiziehen.

Obgleich die Erfindung in den Figuren anhand des Beispiels der Vermessung eines rohrförmigen Gegenstands 26 erläutert wurde, könnte es sich bei dem Gegenstand ebenso ein um einen im Wesentlichen in einer Ebene liegenden Gegenstand, beispielsweise ein Blech, handeln, insbesondere ein Grobblech, ein Warmbandblech oder ein Kaltbandblech. Weiterhin könnte mindestens eine Sendeeinrichtung und/oder mindestens eine Empfangseinrichtung während der Messung unterhalb des Gegenstandes angeordnet sein.

### Bezugszeichenliste

- 10: Gehäuse
- 12: Zuführung
- 14: Pfeil
- 16: Transceiver
- 18: Antenne
- 20: Auswerteeinrichtung
- 22: Gehäuseöffnung
- 24: Schutzgitter
- 26: Gegenstand
- 28: Pfeil
- 30: Spüleinrichtung
- 32: Pfeile
- 34: Reflektor

## Patentansprüche

1. Vorrichtung zum Detektieren eines mittels einer Fördereinrichtung der Vorrichtung durch einen Messbereich der Vorrichtung geförderten Gegenstandes (26), umfassend eine Sendeeinrichtung zum Aussenden von Messstrahlung mit einer Frequenz im Gigahertz- oder Terahertzbereich auf die Außenkontur des Gegenstands (26) und eine Empfangseinrichtung zum Empfangen der von dem Gegenstand (26) reflektierten Messstrahlung, **dadurch gekennzeichnet, dass** zwischen der Sendeeinrichtung und/oder der Empfangseinrichtung einerseits und dem Messbereich andererseits ein für die Messstrahlung transparentes und für Gas durchlässiges Schutzgitter (24) angeordnet ist, wobei weiterhin eine Spüleinrichtung (30) vorgesehen ist zum Spülen des Schutzgitters (24) mit einem Spülgas.

2. Vorrichtung nach Anspruch 1, **dadurch gekennzeichnet, dass** die Sendeeinrichtung und die Empfangseinrichtung durch einen Transceiver (16) gebildet sind.

3. Vorrichtung nach einem der vorhergehenden Ansprüche, **dadurch gekennzeichnet, dass** das Schutzgitter (24) durch ein Glasfasergewebe gebildet ist.

4. Vorrichtung nach einem der vorhergehenden Ansprüche, **dadurch gekennzeichnet, dass** die Sendeeinrichtung und die Empfangseinrichtung in einem Gehäuse (10) angeordnet sind, wobei das Schutzgitter (24) eine dem Messbereich zugewandte Gehäuseöffnung (22) verschließt.

5. Vorrichtung nach einem der vorhergehenden Ansprüche, **dadurch gekennzeichnet, dass** die Spüleinrichtung (30) dazu ausgebildet ist, das Schutzgitter (24) vor, während und/oder nach einer Messung permanent mit dem Spülgas zu spülen.

6. Vorrichtung nach einem der vorhergehenden Ansprüche, **dadurch gekennzeichnet, dass** die Spüleinrichtung (30) dazu ausgebildet ist, das Schutzgitter (24) vor, während und/oder nach einer Messung stoßweise mit dem Spülgas zu spülen.

7. Vorrichtung nach einem der vorhergehenden Ansprüche, **dadurch gekennzeichnet, dass** weiterhin eine Auswerteeinrichtung (20) vorgesehen ist, an der Messwerte der Empfangseinrichtung anliegen, und die dazu ausgebildet ist, anhand der Messwerte den Durchmesser und/oder die Wanddicke und/oder die Außenkontur des Gegenstandes (26) zu bestimmen.

8. Vorrichtung nach Anspruch 7, **dadurch gekennzeichnet, dass** die Auswerteeinrichtung (20) dazu ausgebildet ist, die Spüleinrichtung (30) bei einer Veränderung der von der Empfangseinrichtung gemessenen Strahlungsintensität zum stoßweisen und/oder permanenten Spülen des Schutzgitters (24) mit dem Spülgas anzusteuern.

9. Vorrichtung nach einem der vorhergehenden Ansprüche, **dadurch gekennzeichnet, dass** zwischen der Sendeeinrichtung und/oder der Empfangseinrichtung einerseits und dem Messbereich andererseits ein die Messstrahlung umlenkender Reflektor (34) angeordnet ist.

10. Vorrichtung nach Anspruch 9, **dadurch gekennzeichnet, dass** der Reflektor (34) zwischen dem Schutzgitter (24) und dem Messbereich angeordnet ist.

11. Verfahren zum Detektieren eines Gegenstandes (26) unter Verwendung einer Vorrichtung nach einem der vorhergehenden Ansprüche.

12. Verfahren nach Anspruch 11, **dadurch gekennzeichnet, dass** der Gegenstand (26) im Bereich einer der Produktionsstrecke für den Gegenstand (26) nachgeordneten Kühlstrecke detektiert wird.

13. Verfahren nach einem der Ansprüche 11 oder 12, **dadurch gekennzeichnet, dass** mindestens eine Sendeeinrichtung und/oder mindestens eine Empfangseinrichtung während der Messung unterhalb des Gegenstandes angeordnet ist.

## Claims

1. A device for detecting an object (26) conveyed by means of an apparatus for conveying the device through a measuring region of the device, comprising a transmission apparatus for emitting measuring radiation having a frequency in the gigahertz or terahertz range onto the outer contour of the object (26) and a receiving apparatus for receiving the measuring radiation reflected by the object (26), **characterized in that** a protective mesh (24) which is transparent to the measuring radiation and permeable to gas is arranged between the transmission apparatus and/or the receiving apparatus, on the one hand, and the measuring region, on the other hand, wherein a flushing apparatus (30) is further provided for flushing the protective mesh (24) with a flushing gas.

2. The device according to Claim 1, **characterized in that** the transmission apparatus and the receiving apparatus are formed by a transceiver (16).

3. The device according to any one of the preceding claims, **characterized in that** the protective mesh (24) is formed by a glass fiber fabric.

4. The device according to any one of the preceding claims, **characterized in that** the transmission apparatus and the receiving apparatus are arranged in a housing (10), wherein the protective mesh (24) seals a housing opening (22) which faces the measuring region.

5. The device according to any one of the preceding claims, **characterized in that** the flushing apparatus (30) is configured to continuously flush the protective mesh (24) with the flushing gas before, during and/or after a measurement.

6. The device according to any one of the preceding claims, **characterized in that** the flushing apparatus (30) is configured to intermittently flush the protective mesh (24) with the flushing gas before, during and/or after a measurement.

7. The device according to any one of the preceding claims, **characterized in that** an evaluation apparatus (20) is further provided, to which measurement values from the receiving apparatus are applied, and which is configured to determine the diameter and/or the wall thickness and/or the outer contour of the object (26) based on the measurement values.

8. The device according to Claim 7, **characterized in that** the evaluation apparatus (20) is configured to activate the flushing apparatus (30) to intermittently and/or to continuously flush the protective mesh (24) with the flushing gas when the radiation intensity measured by the receiving apparatus changes.

9. The device according to any one of the preceding claims, **characterized in that** a reflector (34) which deflects the measuring radiation is arranged between the transmission apparatus and/or the receiving apparatus, on the one hand, and the measuring region, on the other hand.

10. The device according to Claim 9, **characterized in that** the reflector (34) is arranged between the protective mesh (24) and the measuring region.

11. A method for detecting an object (26) using a device according to any one of the preceding claims.

12. The method according to Claim 11, **characterized in that** the object (26) is detected in the region of a cooling line downstream of the production line for the object (26).

13. The method according to any one of Claims 11 or 12, **characterized in that** at least one transmission apparatus and/or at least one receiving apparatus is/are arranged beneath the object during the measurement.

## Revendications

1. Dispositif de détection d'un objet (26) transporté à travers une zone de mesure du dispositif au moyen d'un système de transport du dispositif, comportant un système d'émission destiné à émettre un rayonnement de mesure avec une fréquence dans la plage des gigahertz ou des téraherz vers le contour extérieur de l'objet (26) et un système de réception destiné à recevoir le rayonnement de mesure réfléchi par l'objet (26), **caractérisé en ce qu'**une grille de protection (24) perméable au gaz et transparente au rayonnement de mesure est disposée entre le système d'émission et/ou le système de réception d'une part et la zone de mesure d'autre part, dans lequel il est également prévu un système de rinçage (30) destiné au rinçage de la grille de protection (24) avec un gaz de rinçage.

2. Dispositif selon la revendication 1, **caractérisé en ce que** le système d'émission et le système de réception sont formés par un émetteur-récepteur (16).

3. Dispositif selon l'une des revendications précédentes, **caractérisé en ce que** la grille de protection (24) est formée par un tissu en fibres de verre.

4. Dispositif selon l'une des revendications précédentes, **caractérisé en ce que** le système d'émission et le système de réception sont disposés dans un boîtier (10), dans lequel la grille de protection (24) ferme une ouverture de boîtier (22) tournée vers la zone de mesure.

5. Dispositif selon l'une des revendications précédentes, **caractérisé en ce que** le système de rinçage (30) est conçu pour rincer la grille de protection (24) en permanence avant, pendant et/ou après une mesure avec le gaz de rinçage.

6. Dispositif selon l'une des revendications précédentes, **caractérisé en ce que** le système de rinçage (30) est conçu pour rincer la grille de protection (24) par intermittence avant, pendant et/ou après une mesure avec le gaz de rinçage.

7. Dispositif selon l'une des revendications précédentes, **caractérisé en ce qu'**il est également prévu un système d'évaluation (20), auquel sont soumises des valeurs de mesure du système de réception, et lequel est conçu pour déterminer le diamètre et/ou l'épaisseur de paroi et/ou le contour extérieur de l'objet (26) à l'aide des valeurs de mesure.

8. Dispositif selon la revendication 7, **caractérisé en ce que** le système d'évaluation (20) est conçu pour actionner le système de rinçage (30) en vue d'un rinçage par intermittence et/ou permanent de la grille de protection (24) avec le gaz de rinçage lors d'une modification de l'intensité de rayonnement mesurée par le système de réception.

9. Dispositif selon l'une des revendications précédentes, **caractérisé en ce qu'**un réflecteur (34) déviant le rayonnement de mesure est disposé entre le système d'émission et/ou le système de réception d'une part et la zone de mesure d'autre part.

10. Dispositif selon la revendication 9, **caractérisé en ce que** le réflecteur (34) est disposé entre la grille de protection (24) et la zone de mesure.

11. Procédé de détection d'un objet (26) à l'aide d'un dispositif selon l'une des revendications précédentes.

12. Procédé selon la revendication 11, **caractérisé en ce que** l'objet (26) est détecté dans la région d'un trajet de refroidissement situé en aval d'un trajet de production pour l'objet (26).

13. Procédé selon l'une des revendications 11 ou 12, **caractérisé en ce qu'**au moins un système d'émission et/ou au moins un système de réception est disposé sous l'objet pendant la mesure.
